# EUROPEAN PATENT SPECIFICATION

(11) **EP 2 778 748 B1**
(45) Date of publication and mention of the grant of the patent: **10.05.2017**
(21) Application number: 13158662.0
(22) Date of filing: 11.03.2013
(51) Int. Cl.: G02C 1/04, G02C 1/06, G02C 5/02

(54) **Eyeglass frame**
Brillenrahmen
Monture de lunettes

(43) Date of publication of application: 17.09.2014
(73) Proprietor: Four Nines Co., Ltd., Setagaya-ku Tokyo 157-0066 (JP)
(72) Inventor: Iimura, Yuichi, Tokyo Tokyo 157-0066 (JP)
(74) Representative: Pfenning, Meinig & Partner mbB

(56) References cited:
- EP-A1- 2 107 415
- EP-A1- 2 302 440
- FR-A1- 2 544 087
- FR-E- 59 177
- GB-A- 1 050 017
- JP-A- 2012 123 408
- KR-A- 20120 013 801

## Description

The present invention relates to an eyeglass frame for holding eyeglass lenses, more specifically to an eyeglass frame in that, even if temples are opened widely, deformation or braking of the eyeglass lenses is not generated.

Generally, an eyeglass frame includes a front frame to hold right and left eyeglass lenses and temples connected to each of opposite ends of the front frame through a hinge. As such a front frame, there are a full rim type (a type for holding each lens by a rim extending throughout the entirety of the lens) and a rimless type called a half rim type or two points (a type for holding a part of each lens by a rim and for holding the other part of the lens by a screw, wire or string).

When a user uses usually the eyeglass frame, the temples are in a most opened state (maximum open state or position) relative to the front frame. On the other hand, when a user buys an eyeglass frame, an open degree of the hinge connecting the front frame and each of the temples, or a bending degree of the temples is adjusted such that the temples do not impart a large force to a head of the user, and the temples are fitted to the head.

However, when the user mounts the eyeglasses on the head, or removes them from the head, the user tends to open unconsciously the temples and more widely than the maximum open state. Therefore, if the eyeglass frame is used throughout a long period, the temples result in outwardly bent state and gradually are not fitted to the head, and hence the eyeglasses cannot be used. In addition, a large force is sometime added to the front frame by an excessive opening of the temples. Consequently, the breaking of the front frame, and further breaking of the eyeglass lenses are generated.

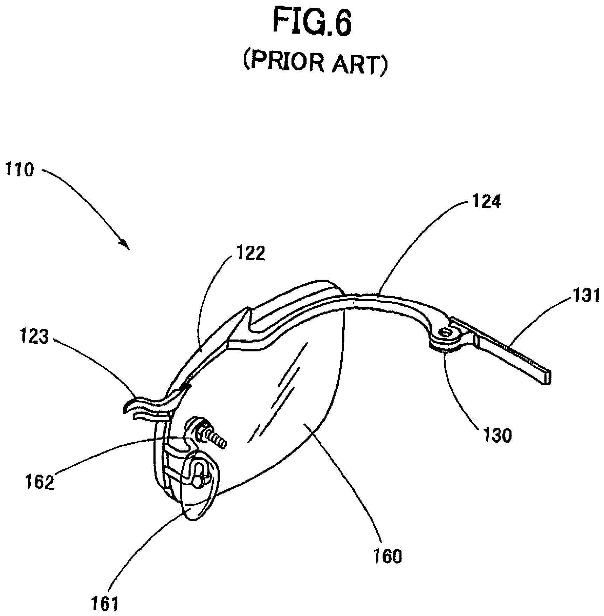

As shown in FIG.6, there is disclosed a conventional eyeglass frame 110 in which, even if temples are opened largely, a force is not imparted to a front frame or eyeglass lenses (for reference, see JP2008-76743A). The eyeglass frame 110 has a generally L-character like shape and includes a pair of right and left lens stays 122 each holding an inner side portion of an eyeglass lens 160, a bridge 123 connecting the pair of lens stays 122, a connection arm 124 connected to each of the lens stays 122, and a temple 131 connected to each of the connection arms 124 through a hinge 130 to be rotatable inwardly and outwardly. Meanwhile, lens stoppers 162 to hold the eyeglass lenses 160 are provided on the lens stays 122.

Here, each of the eyeglass lenses 160 is attached to each of the lens stays 122 at one point. Therefore, even if the temples 131 are opened widely, a force is not almost imparted to the eyeglass lenses 160. In addition, because the temples 131 and the connection arms 124 have elasticity, even if the temples are opened widely repeat, the opening operation or movement can be absorbed by the elasticity of the temples 131 and the connection arms 124, and has no effect on the lenses 160. Meanwhile, reference number 161 shows a nose pad attached to each of the lens stays 122.

Other relevant documents showing eyeglass frames provided with structures intended to absorb, at least in part, the deformation caused by the opening operation of the temples are the following ones: FR59177E and KR20120013801.

However, the structure of the conventional eyeglass frame cannot be applied to a full rim-type front frame made of a resin, because a design and a structure of eyeglasses are limited. Accordingly, it is desired that a function having no effect on eyeglass lenses can be applied widely to eyeglasses having other design or structure, even if a wide opening of the temples is performed repeatedly.

An object of the present invention is to provide an eyeglass frame An object of the present invention is to provide an eyeglass frame which has a function in which even if temples are opened widely, a force is almost not imparted to a front frame or eyeglass lenses, and is capable of having a new design and applying to any type of eyeglasses.

To accomplish the foregoing object, an eyeglass frame according to an embodiment of the present invention includes an outer frame, temples each being connected to each of opposite ends of the outer frame, an inner frame disposed inside the outer frame, and an attaching member to attach the inner frame to the outer frame.

The inner frame includes an inner front frame having right and left inner rims to hold right and left eyeglass lenses.

The attaching member includes an inner bridge connecting the right and left inner rims of the inner frame and is attached to the outer frame to fix the inner frame to the outer frame.

FIG.1A is a schematic front view showing an eyeglass frame according to an embodiment of the present invention.
FIG.1B is a schematic side view of the eyeglass frame shown in FIG.1A.
FIG.1C is a schematic plan view of the eyeglass frame shown in FIG.1A.

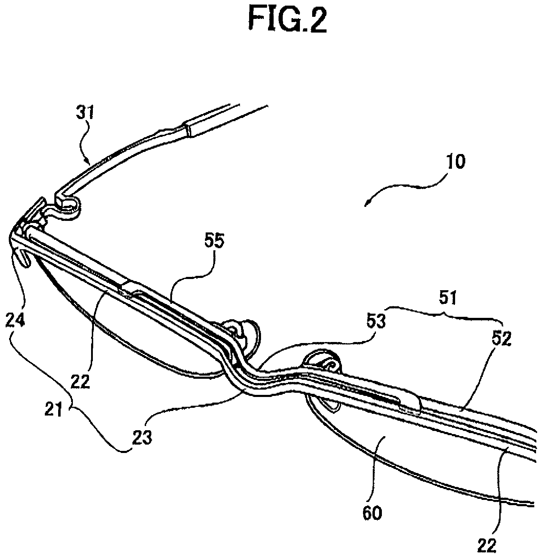

FIG.2 is a schematic perspective view showing a front part of the eyeglass frame shown in FIGs.1A to 1C.
FIG.3A is a schematic plan view of an outer frame of the eyeglass frame shown in FIGs.1A to 1C.
FIG.3B is a schematic front view of the outer frame of the eyeglass frame shown in FIGs.1A to 1C.
FIG.4A is a schematic plan view of an inner frame of the eyeglass frame shown in FIGs.1A to 1C.
FIG.4B is a schematic front view of the inner frame of the eyeglass frame shown in FIGs.1A to 1C.
FIG.5 is an explanatory view showing the inner frame of the eyeglass frame according to the present invention.
FIG.6 is a schematic perspective view showing an example of a conventional eyeglass frame.

Preferred embodiments of the present invention will be explained hereinafter in detail with reference to the accompanying drawings.

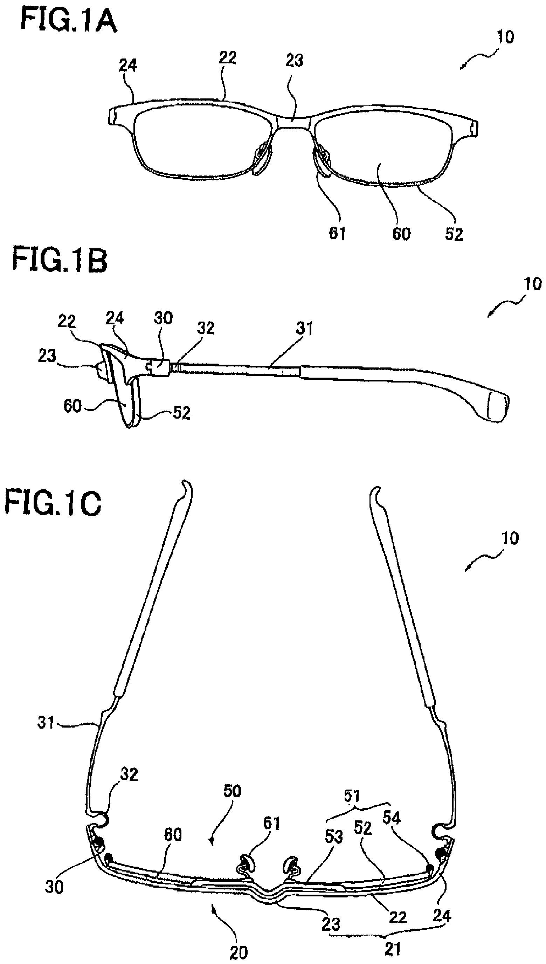

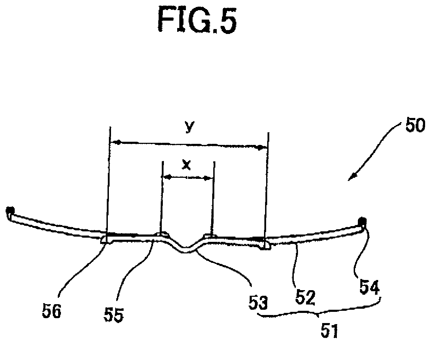

FIGs.1A to 1C, and 5 illustrate an eyeglass frame 10 according to an embodiment of the present invention. The eyeglass frame 10 includes an outer frame 20, an inner frame 50 connected to the outer frame 20, and temples 31 attached to the outer frame 20, as shown in FIG.1C.

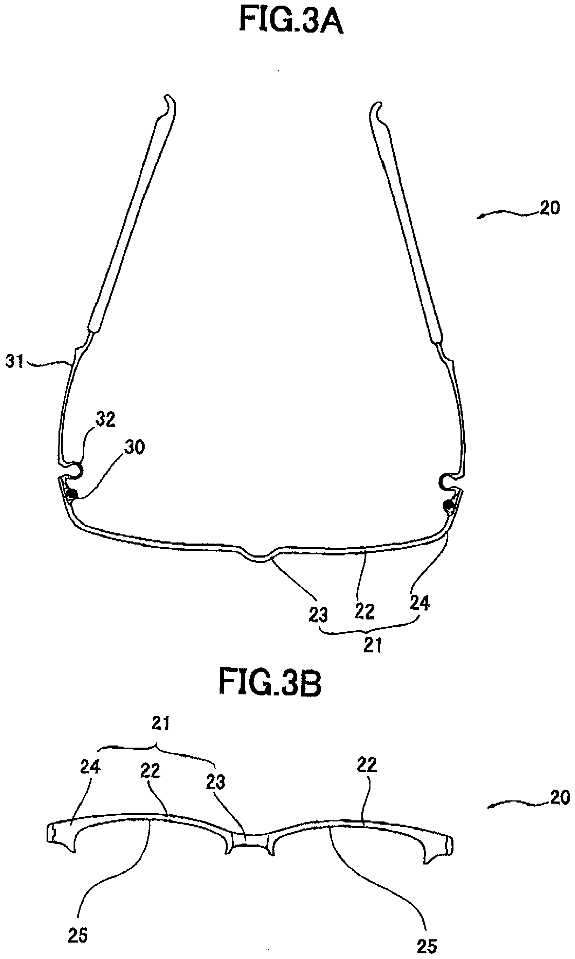

The outer frame 20 includes an outer front frame 21 and connection arms 24 extending backward from opposite ends of the outer front frame 21, as shown in FIGs.3A and 3B. The outer front frame 21 has right and left outer rims 22 and an outer bridge connecting the right and left outer rims 22 (see FIG.3B). The right and left outer rims 22 are disposed to correspond to eyeglass lenses 60 which are described below, respectively. Each of the outer rims 22 has a contour 25 along an upper edge of each of the eyeglass lenses 60 so that an object viewing through the eyeglass lenses 60 is not blocked.

Each of the temples 31 is connected to the connection arm 24 extending backward from each of the opposite ends of the outer front frame 21 through a hinge 30. In this case, the temples 31 are rotatably attached inward and outward to the outer front frame 21. Accordingly, the temples 31 can be opened outward to a maximum open position and folded inwardly.

The outer front frame 21 is made of a metal in the illustrated embodiment, but may be made of other materials, for example, a resin. In this embodiment, the outer front frame 21 is formed by a half rim type, but may be formed by a full rim type. The temples 31 is made of a metal in this embodiment, but may be made of a resin. Here, the full rim type is a type in which a rim extends throughout the entirety of each eyeglass lens to hold the lens, and the half rim type is a type in which a half rim holds a part of the eyeglass lens and a nylon string or the like holds the other part of the eyeglass lens.

Each of the hinges 30 is configured to support rotatably each of the temples 31 on the outer front frame 21 and to limit a rotation range of the temple 31. More specifically, in a use sate of the eyeglass frame 10, the temples 31 are not rotated exceeding the maximum open position, and in a non-use state, the temples can be folded inwardly to be contained in a case (not shown).

The outer frame 20 includes preferably an elastic part 32 provided at a position close to each hinge 30. Here, the position close to the hinge includes a part of the connection arm 24, a part of temple 31 and a part of the hinge 30. In this embodiment, each of the elastic parts 32 is formed by forming an end portion of the temple 31 in a U-character like shape. Meanwhile, each of the elastic parts 32 is not limited to the U-character like shape, may be formed in an S-character like shape and so on, or any shape.

Each of the elastic parts 32 is preferably deformable resiliently at an angle equal to 10 degrees or more. Thereby, when a user mounts the eyeglass frame 10 on a head, or removes it from the head, it is possible to open further the temples 31 exceeding the maximum open position by about 10 degrees or more at one side. Consequently, it is possible to prevent the eyeglass lenses 60 from bering broken.

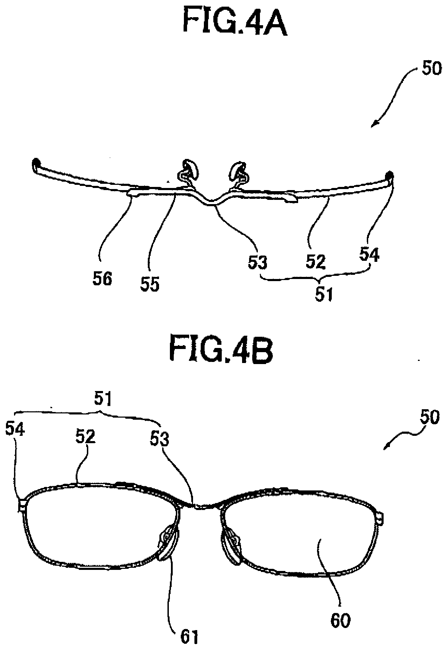

As shown in FIG.4, the inner front frame 51 of the inner frame 50 is made of a metal, a pair of inner rims 52 is connected by an inner bridge 53, and a pair of eyeglass lenses is provided on the inner front frame 51. In the embodiment, the inner front frame 51 is formed in a full rim type fixing each of the eyeglass lenses 60 by a rim, but may be formed in a half rim type.

The inner frame 50 is connected to the outer frame 20 by an attaching member. The attaching member has the following structure.

Connection members 55 extend from opposite ends of the bridge 53 of the inner front frame 51. The bridge 53 connects the pair of rims 52. An end portion 56 of each of the connection members 55 is connected to the outer front frame 21. A connection of each of the rims 52 and each of the connection members 55, a connection of each of the connection members 55 and the bridge 53, and a connection of the bridge 53 and the outer front frame 21 are preferably performed by brazing. Of course, other any methods may be used. Consequently, the inner frame 50 is fixed to the outer frame 20 by the attaching member.

As shown in FIG.5, if a distance between opposite end portions of the bridge 53 connecting the rims is x, and a distance between the end portions 56 of the connection members 55 is y, a relationship of x and y is set preferably. That is to say, of course, y is larger than x, but y is preferably two times or more of x, in particular preferably is a value between 2.5 and 3,0 times of x.

With such a relationship, even if the temples 31 are opened widely, any force generated thereby is almost not imparted to the eyeglass lenses 60. That is to say, the force is absorbed by the outer front frame 21 and the inner front frame 51. In addition, because the bridge 53 and each of the rims are connected by one point, the eyeglass lenses 60 have no influence of deformation or the like by the opening movement of the temples 31. Furthermore, the influence is very small by the elastic part 32 disposed adjacent to each of the hinges 30.

In addition, the outer front frame 21 can be formed in the full rim type, or the half rim type, the inner front frame 51 also can be formed in the full rim type, or the half rim type. The temples 31 can be made of a resin or metal. Consequently, a design having wide variation can be provided.

Meanwhile, in the eyeglass frame 10, an example in which the nose pads 61 are attached to the inner front frame 51 is shown. However, the nose pads may be attached to the outer front frame 21. In each of the elastic parts 32, a portion thereof adjacent to the connection arm has the U-character like shape, but a portion thereof adjacent to the temple may be formed in a U-character like shape, or a part of the connection arm 24, or a part of the temple 31 can be formed in a U-character like shape.

With the foregoing structure, it is possible to provide an eyeglass frame which has a function in which even if temples are opened widely, a force is almost not imparted to a front frame or eyeglass lenses, and is capable of having a new design and applying to any type of eyeglasses.

Although the preferred embodiments of the present invention have been described, it should be understood that the present invention is not limited to these embodiments, various modifications and changes can be made to the embodiments by those skilled in the art as long as such modifications and changes are within the scope of the present invention as defined by the Claims.

## Claims

1. An eyeglass frame (10), comprising:
an outer frame (20);
temples (31) each being connected to each of opposite ends of the outer frame (20);
an inner frame (50) disposed inside the outer frame (20); and
an attaching member to attach the inner frame (50) to the outer frame (20),
wherein the outer frame (20) includes an outer front frame (21) having right and left outer rims (22) and an outer bridge (23) connecting the right and left outer rims (22), and connection arms (24) each extending backward from each of opposite ends of the outer front frame (21),
wherein each of the right and left outer rims (22) has a contour (25) along an upper edge of each of eyeglass lenses (60) attached to the inner frame (50),
the inner frame (50) including an inner front frame (51) having right and left inner rims (52) to hold the right and left eyeglass lenses (60),
the attaching member including an inner bridge (53) connecting the right and left inner rims (52) of the inner frame (50) and being attached to the outer frame (20) to fix the inner frame (50) to the outer frame (20), **characterized in that** the attaching member includes connection members (55), the connection members (55) being distinct from the right and left inner rims (52) and extending from opposite ends of the inner bridge (53) of the inner front frame (51), an end portion (56) of each of the connection members (55) being connected to the outer rims (22) of the outer front frame (21).

2. The eyeglass frame (10) according to claim 1, wherein
the inner frame (50) further includes a nose pad (61) provided on each of the right and left inner rims (52) of the inner front frame (51).

3. The eyeglass frame (10) according to claim 1, wherein
the inner frame (50) is made of a metal.

4. The eyeglass frame (10) according to claim 1, wherein
the inner front frame (51) is a full rim type.

5. The eyeglass frame (10) according to claim 1, wherein
the outer frame (20) is made of a metal.

6. The eyeglass frame (10) according to claim 1, wherein
the outer front frame (21) is a half rim type.

7. The eyeglass frame (10) according to claim 1, wherein
each of the temples (31) is connected to each of opposite ends of the outer frame (20) through a hinge (30).

8. The eyeglass frame (10) according to claim 7, wherein
the outer frame (20) includes an elastic part (32) provided close to each hinge (30),
wherein each of the temples (30) is connected to the outer frame (20) through the hinge (30) and the elastic part (32).

9. The eyeglass frame (10) according to claim 1, wherein
a distance between the end portions (56) of the connection members (55) is larger two times or more than a distance between opposite end portions of the inner bridge (53) connecting the right and left inner rims (52).

## Patentansprüche

1. Brillenrahmen (10), welcher aufweist:
einen äußeren Rahmen (20);
Bügel (31), die jeweils mit jedem von entgegengesetzten Enden des äußeren Rahmens (20) verbunden sind;
einen inneren Rahmen (50), der innerhalb des äußeren Rahmens (20) angeordnet ist; und
ein Befestigungsteil zum Befestigen des inneren Rahmens (50) an dem äußeren Rahmen (20),
wobei der äußere Rahmen (20) einen äußeren Frontrahmen (21) mit einem rechten und einem linken äußeren Rand (22) und einer äußeren Brücke (23), die den rechten und den linken äußeren Rand (22) verbindet, und Verbindungsarme (24), die sich jeweils von jedem der entgegengesetzten Enden des äußeren Frontrahmens (21) rückwärts erstrecken, hat,
wobei jeder von dem rechten und dem linken äußeren Rand (22) eine Kontur (25) entlang einer oberen Kante von jeder der an dem inneren Rahmen (50) angebrachten Brillenlinsen (60) hat,
der innere Rahmen (50) enthaltend einen inneren Frontrahmen (51) einen rechten und einen linken inneren Rand (52) zum Halten der rechten und der linken Brillenlinse (60) hat,
das Befestigungsteil eine innere Brücke (53), die den rechten und den linken inneren Rand (52) des inneren Rahmens (50) verbindet und an dem äußeren Rahmen (20) angebracht ist, um den inneren Rahmen (50) an dem äußeren Rahmen (20) zu fixieren, enthält, **dadurch gekennzeichnet, dass**
das Befestigungsteil Verbindungsteile (55) enthält, wobei die Verbindungsteile (55) von dem rechten und dem linken inneren Rand (52) getrennt sind und sich von entgegengesetzten Enden der inneren Brücke (53) des inneren Frontrahmens (51) weg erstrecken, und ein Endbereich (56) von jedem der Verbindungsteile (55) mit den äußeren Rändern (22) des äußeren Frontrahmens (21) verbunden ist.

2. Brillenrahmen (10) nach Anspruch 1, bei dem
der innere Rahmen (50) weiterhin ein Nasenpad (61) enthält, das an jedem von dem rechten und dem linken inneren Rand (52) des inneren Frontrahmens (51) angeordnet ist.

3. Brillenrahmen (10) nach Anspruch 1, bei dem
der innere Rahmen (50) aus einem Metall besteht.

4. Brillenrahmen (10) nach Anspruch 1, bei dem
der innere Frontrahmen (51) ein Vollrandtyp ist.

5. Brillenrahmen (10) nach Anspruch 1, bei dem
der äußere Rahmen (20) aus einem Metall besteht.

6. Brillenrahmen (10) nach Anspruch 1, bei dem
der äußere Frontrahmen (21) ein Halbrandtyp ist.

7. Brillenrahmen (10) nach Anspruch 1, bei dem
jeder der Bügel (31) mit jedem von entgegengesetzten Enden des äußeren Rahmens (20) durch ein Scharnier (30) verbunden ist.

8. Brillenrahmen (10) nach Anspruch 7, bei dem
der äußere Rahmen (20) einen elastischen Teil (32) enthält, der nahe jedes Scharniers (30) angeordnet ist,
wobei jeder der Bügel (30) über das Scharnier (30) und den elastischen Teil (32) mit dem äußeren Rahmen (20) verbunden ist.

9. Brillenrahmen (10) nach Anspruch 1, bei dem
ein Abstand zwischen den Endbereichen (56) der Verbindungsteile (55) größer ist als das Zweifache oder mehr eines Abstands zwischen entgegengesetzten Endbereichen der inneren Brücke (53), die den rechten und den linken inneren Rand (52) verbindet.

## Revendications

1. Monture de lunettes (10), comprenant :
une monture externe (20) ;
des branches (31) dont chacune est connectée à chacune d'extrémités opposées de la monture externe (20) ;
une monture interne (50) disposée à l'intérieur de la monture externe (20) ; et
un élément de fixation pour fixer la monture interne (50) à la monture externe (20), dans laquelle :
la monture externe (20) inclut une monture avant externe (21) qui comporte des bordures externes droite et gauche (22) et un pont externe (23) qui connecte les bordures externes droite et gauche (22), et des bras de connexion (24) dont chacun s'étend vers l'arrière depuis chacune d'extrémités opposées de la monture avant externe (21) ; dans laquelle :
chacune des bordures externes droite et gauche (22) comporte un contour (25) le long d'un bord supérieur de chacun de verres de lunette (60) fixés à la monture interne (50),
la monture interne (50) incluant une monture avant interne (51) qui comporte des bordures internes droite et gauche (52) pour maintenir les verres de lunette droit et gauche (60),
l'élément de fixation incluant un pont interne (53) qui connecte les bordures internes droite et gauche (52) de la monture interne (50) et qui est fixé à la monture externe (20) afin de lier la monture interne (50) à la monture externe (20),
**caractérisée en ce que** :
l'élément de fixation inclut des éléments de connexion (55), les éléments de connexion (55) étant distincts des bordures internes droite et gauche (52) et s'étendant depuis des extrémités opposées du pont interne (53) de la monture avant interne (51), et une partie d'extrémité (56) de chacun des éléments de connexion (55) étant connectée aux bordures externes (22) de la monture avant externe (21).

2. Monture de lunettes (10) selon la revendication 1, dans laquelle :
la monture interne (50) inclut en outre un appui nasal (61) prévu sur chacune des bordures internes droite et gauche (52) de la monture avant interne (51).

3. Monture de lunettes (10) selon la revendication 1, dans laquelle la monture interne (50) est réalisée en un métal.

4. Monture de lunettes (10) selon la revendication 1, dans laquelle la monture avant interne (51) est du type bordure complète.

5. Monture de lunettes (10) selon la revendication 1, dans laquelle la monture externe (20) est réalisée en un métal.

6. Monture de lunettes (10) selon la revendication 1, dans laquelle la monture avant externe (21) est du type bordure complète.

7. Monture de lunettes (10) selon la revendication 1, dans laquelle :
chacune des branches (31) est connectée à chacune d'extrémités opposées de la monture externe (20) par l'intermédiaire d'une charnière (30).

8. Monture de lunettes (10) selon la revendication 7, dans laquelle :
la monture externe (20) inclut une partie élastique (32) prévue à proximité de chaque charnière (30), dans laquelle :
chacune des branches (31) est connectée à la monture externe (20) par l'intermédiaire de la charnière (30) et de la partie élastique (32).

9. Monture de lunettes (10) selon la revendication 1, dans laquelle :
une distance entre les parties d'extrémité (56) des éléments de connexion (55) est deux fois plus grande ou plus qu'une distance entre des parties d'extrémité opposées du pont interne (53) qui connecte les bordures internes droite et gauche (52).
